# EUROPÄISCHE PATENTANMELDUNG

(11) **EP 3 401 154 A1**
(43) Veröffentlichungstag der Anmeldung: **14.11.2018**
(21) Anmeldenummer: 17170529.6
(22) Anmeldetag: 11.05.2017
(51) Int. Cl.: B60L 11/18, H01F 38/14

(54) **FAHRZEUGSEITIGE LADEVORRICHTUNG FÜR INDUKTIVES LADEN**

(71) Anmelder: MAGNA STEYR Fahrzeugtechnik AG & Co KG, 8041 Graz (AT)
(72) Erfinder: SCHRUTH, Rainer, 8042 Graz (AT)
(74) Vertreter: Zangger, Bernd

(57) **Zusammenfassung**

Eine fahrzeugseitige Ladevorrichtung für ein induktives Ladesystem zum berührungslosen Aufladen eines elektrischen Energiespeichers eines Fahrzeuges (1), umfassend eine Sekundärspule (2) in einem Gehäuse (3) der Ladevorrichtung (4), wobei das Gehäuse (3) der Ladevorrichtung (4) nicht-planar ausgebildet ist, insbesondere zumindest einen Knick und/oder eine Biegung aufweist, wobei die Sekundärspule (2) nicht-planar ausgebildet ist, insbesondere zumindest einen Knick und/oder eine Biegung aufweist, so dass die Sekundärspule (2) der Form des Gehäuses (3) der Ladevorrichtung (4) folgt, ein induktives Ladesystem umfassend zumindest eine solche fahrzeugseitige Ladevorrichtung (4) und ein Verfahren zur Herstellung einer solchen fahrzeugseitigen Ladevorrichtung (4).

## Beschreibung

### Gebiet der Erfindung

Die vorliegende Erfindung betrifft eine fahrzeugseitige Ladevorrichtung für ein induktives Ladesystem zum berührungslosen Aufladen eines elektrischen Energiespeichers eines Fahrzeuges, ein Induktives Ladesystem umfassend zumindest eine solche fahrzeugseitige Ladevorrichtung und ein Verfahren zur Herstellung einer solchen fahrzeugseitigen Ladevorrichtung.

### Stand der Technik

Induktive Ladesysteme zum berührungslosen Aufladen eines elektrischen Energiespeichers eines Fahrzeuges, insbesondere eines Elektro- oder Hybridfahrzeuges sind an sich bekannt. Durch derartige Ladesysteme kann elektrische Energie von einer Basisstation bzw. primärseitigen Ladestation zu einem beweglichen Verbraucher, insbesondere zu einer Antriebsbatterie eines Elektro- oder Hybridfahrzeuges übertragen werden und dieses somit mit elektrischer Energie betankt werden.

Solche kabellosen, induktiven Ladesysteme werden üblicherweise im Bereich eines Unterbodens eines Fahrzeuges verbaut, wobei verschiedene Anforderungen wie etwa ausreichende Bodenfreiheit, vorgesehene Böschungswinkel, Einfederungswege, Aerodynamik etc. zu berücksichtigen sind.

Insbesondere soll dabei durch die fahrzeugseitige Ladevorrichtung möglichst wenig Bauraum benötigt werden, dabei die Ladevorrichtung aber eine ausreichend hohe Leistung für ein zügiges Laden des Energiespeichers des Fahrzeuges aufweisen.

Beispielsweise aus der DE 10 2011 108 544 A1 oder der JP 2014 127 592 A ist es bekannt die Gehäuse von fahrzeugseitigen Ladevorrichtungen daher besser an den Fahrzeug-Unterboden anzupassen, in dem diese schräg oder auch nicht-planar ausgeführt werden.

### Zusammenfassung der Erfindung

Es ist eine Aufgabe der Erfindung, eine fahrzeugseitige Ladevorrichtung der genannten Art in dieser Hinsicht zu verbessern und insbesondere eine fahrzeugseitige Ladevorrichtung anzugeben, die wenig Bauraum benötigt und dabei eine hohe Leistung zur Verfügung stellt, sowie ein geeignetes induktives Ladesystem zum Laden einer solche fahrzeugseitigen Ladevorrichtung und ein Verfahren zur Herstellung einer solchen fahrzeugseitigen Ladevorrichtung.

Die Lösung der Aufgabe erfolgt durch eine fahrzeugseitige Ladevorrichtung für ein induktives Ladesystem zum berührungslosen Aufladen eines elektrischen Energiespeichers eines Fahrzeuges, umfassend eine Sekundärspule in einem Gehäuse der Ladevorrichtung, wobei das Gehäuse der Ladevorrichtung nicht-planar ausgebildet ist, insbesondere zumindest einen Knick und/oder eine Biegung aufweist, wobei die Sekundärspule nicht-planar ausgebildet ist, insbesondere zumindest einen Knick und/oder eine Biegung aufweist, so dass die Sekundärspule der Form des Gehäuses der Ladevorrichtung folgt.

Erfindungsgemäß wird nicht nur ein Gehäuse einer fahrzeugseitigen Ladevorrichtung sondern die Sekundärspule der Ladevorrichtung selbst nicht-planar ausgebildet. Diese nicht-planare Ausbildung kann insbesondere einen Knick und/oder eine Biegung aufweisen, somit können Gehäuse und Sekundärspule auch abgewinkelt ausgebildet sein. Hierdurch kann die gesamte fahrzeugseitige Ladevorrichtung optimal an die Karosserie, insbesondere den Unterboden, eines Fahrzeuges angepasst werden und dabei ein größtmöglicher Raum innerhalb des Gehäuses für eine Ladespule genutzt werden.

Die fahrzeugseitige Ladevorrichtung ist dabei vorzugsweise starr ausgebildet, also aus einem festen, formbeständigen Material.

Bevorzugt sind beide Gehäuseflächen, die die Sekundärspule in Einbaulage oben und unten umgeben, gleich geformt wie die Sekundärspule selbst, weisen also an den selben Positionen jeweils Knicke und/oder Biegungen auf, so dass die Sekundärspule optimal an das Gehäuse angepasst ist und einen größtmöglichen Raum innerhalb des Gehäuses einnimmt.

Die Spule ist insbesondere eine sogenannte "Flachspule" und weist daher eine vergleichsweise geringe Höhe im Vergleich zum Durchmesser der Spulenwicklungen auf. Die Ladevorrichtung ist daher bevorzugt plattenförmig, wobei die Platte jedoch nicht planar ist.

Vorzugsweise umfasst die Sekundärspule Wicklungen und alle Wicklungen der Sekundärspule sind nicht-planar ausgebildet, insbesondere weisen sie zumindest einen Knick und/oder eine Biegung auf. Alle Wicklungen können somit der Form des Gehäuses der Ladevorrichtung folgen.

Bevorzugt umfasst die Sekundärspule zumindest einen Spulenträger und der Spulenträger der Sekundärspule ist nicht-planar ausgebildet. Auch der Spulenträger weist daher bevorzugt zumindest einen Knick und/oder eine Biegung auf, so dass der Spulenträger der Form des Gehäuses der Ladevorrichtung folgt.

Bevorzugt umfasst die Sekundärspule zumindest einen Ferritkern und der Ferritkern der Sekundärspule ist nicht-planar ausgebildet, und weist bevorzugt zumindest einen Knick und/oder eine Biegung auf, so dass der Ferritkern der Form des Gehäuses der Ladevorrichtung folgt.

Bevorzugt umfasst die sekundärseitige Ladevorrichtung zumindest eine elektronische Schaltung und/oder zumindest ein Tragelement für diese elektronische Schaltung, beispielsweise eine oder mehrere Platinen, und die elektronische Schaltung und/oder das Tragelement und/oder die Anordnung der Tragelemente ist nicht-planar ausgebildet, und weist bevorzugt zumindest einen Knick und/oder eine Biegung auf, so dass die elektronische Schaltung bzw. das Tragelement oder die Tragelemente der Form des Gehäuses der fahrzeugseitigen Ladevorrichtung im Wesentlichen folgt. Das Tragelement kann insbesondere aus einem elektrisch isolierenden Grundmaterial bestehen, das einerseits elektronische Bauteile trägt und meist auf der Oberfläche oder in Zwischenschichten elektrisch leitende Leiterbahnen und Kontaktelemente aufweist, um die elektronischen Bauteile entsprechend der jeweiligen gewünschten elektronischen Verschaltung elektrisch zu verbinden bzw. zu kontaktieren.

Die Lösung der Aufgabe erfolgt auch durch ein induktives Ladesystem umfassend zumindest eine fahrzeugseitige Ladevorrichtung wie beschrieben und zumindest eine primärseitige Ladestation, wobei die Ladestation eine Primärspule umfasst, wobei die Primärspule planar ausgebildet ist und somit nicht der Form der Sekundärspule der fahrzeugseitigen Ladevorrichtung entspricht. Hierdurch kann eine übliche primäre Ladestation mit einer planaren Primärspule und üblicherweise einer planaren Primärplatte zum Laden der nicht-planaren Sekundärspule verwendet werden.

Alternativ kann ein induktives Ladesystem erfindungsgemäß zumindest eine fahrzeugseitige Ladevorrichtung wie oben beschrieben umfassen und zumindest eine primärseitige Ladestation, wobei die Ladestation eine Primärspule umfasst, wobei die Primärspule nicht-planar ausgebildet ist und somit der Form der Sekundärspule der fahrzeugseitigen Ladevorrichtung im Wesentlichen entspricht. Hierdurch wird ein Ladesystem angegeben mit optimal aufeinander abgestimmten Primärspulen und Sekundärspulen, die ein effizientes Aufladen des Energiespeichers des Fahrzeuges bei geringem Bauraum der fahrzeugseitigen Ladevorrichtung ermöglichen.

Die Lösung der erfindungsgemäßen Aufgabe erfolgt auch durch ein Verfahren zur Herstellung einer fahrzeugseitigen Ladevorrichtung wie zuvor beschrieben, wobei die Sekundärspule nicht-planar, insbesondere zumindest einen Knick und/oder eine Biegung aufweisend, hergestellt wird, insbesondere Wicklungen auf einen Spulenträger nicht-planar aufgewickelt werden, und die so hergestellte nicht-planare Sekundärspule in ein nicht-planares Gehäuse der Ladevorrichtung eingelegt wird.

Alternativ kann in einem erfindungsgemäßen Verfahren zur Herstellung einer fahrzeugseitigen Ladevorrichtung die Sekundärspule planar hergestellt werden, insbesondere Wicklungen auf einen Spulenträger planar aufgewickelt werden, anschließend die Sekundärspule unter Anwendung einer äußeren Kraft verformt werden, so dass die Sekundärspule nicht-planar wird, insbesondere zumindest einen Knick und/oder eine Biegung aufweist, und die so hergestellte nicht-planare Spule in ein nicht-planares Gehäuse der Ladevorrichtung eingelegt werden.

### Kurzbeschreibung der Zeichnungen

Die Erfindung wird im Folgenden beispielhaft unter Bezugnahme auf die Zeichnungen beschrieben.
- Fig. 1: ist eine schematische Darstellung einer planaren fahrzeugseitigen Ladevorrichtung (oben) und einer nichtplanaren fahrzeugseitigen Ladevorrichtung (unten) an einem Fahrzeug von der Seite.
- Fig. 2: ist eine schematische Darstellung einer erfindungsgemäßen fahrzeugseitigen Ladevorrichtung in einer seitlichen Schnittdarstellung.
- Fig. 3: ist eine dreidimensionale schematische Darstellung einer erfindungsgemäßen fahrzeugseitigen Ladevorrichtung.
- Fig. 4: ist eine dreidimensionale schematische Darstellung einer erfindungsgemäßen fahrzeugseitigen Ladevorrichtung und ihrer Sekundärspule.
- Fig. 5: ist eine schematische seitliche Schnittdarstellung verschiedener beispielhafter Sekundärspulenformen für eine erfindungsgemäße fahrzeugseitige Ladevorrichtung.

### Detaillierte Beschreibung der Erfindung

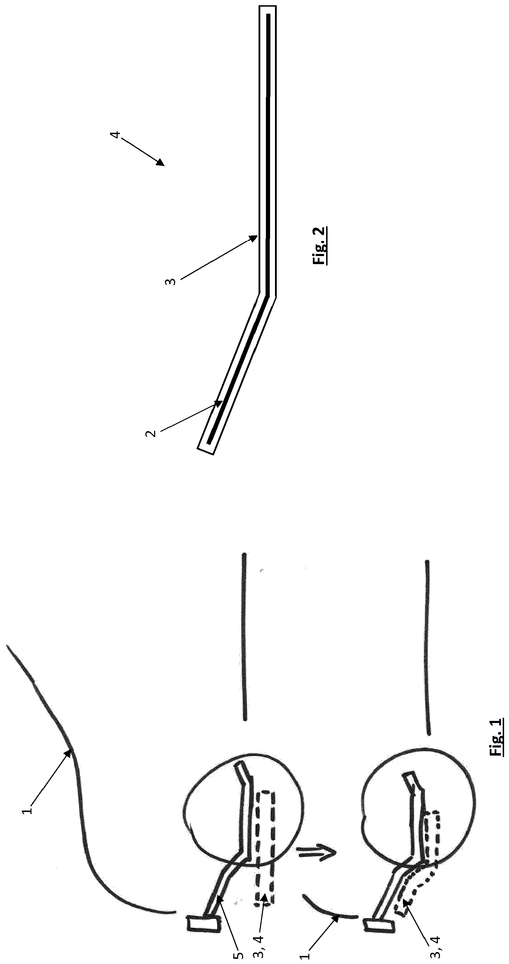

Fig. 1 zeigt in einer schematischen Darstellung, im oberen Bild, eine übliche planare fahrzeugseitige Ladevorrichtung 4, die im Bereich eines Unterbodens 5 eines Fahrzeuges 1 angeordnet ist. Der Unterboden 5 weist in diesem Bereich einen Knick auf. Die Ladevorrichtung 4 ist in der oben dargestellten Ausbildung jedoch planar ausgebildet und folgt daher nicht dem Verlauf der Karosserie bzw. des Unterbodens 5.

In der unten dargestellten Ausbildung einer Ladevorrichtung 4 weist die Ladevorrichtung 4 ebenfalls einen Knick an der selben Position auf, wie der Unterboden 5. Hierzu ist das Gehäuse 3 der Ladevorrichtung entsprechend mit einem Knick ausgeführt. Die Ladevorrichtung 4 ist daher deutlich besser an die Kontur der Karosserie bzw. des Unterbodens 5 des Fahrzeuges 1 angepasst. Die erfindungsgemäße Konturanpassung der Ladevorrichtung 4 ist selbstverständlich nicht auf einen Knick oder eine Biegung in Fahrzeugquerrichtung, wie in Fig. 1 dargestellt, beschränkt, sondern kann Anpassungen an die Karosserie und / oder den Unterboden 5 in allen Raumrichtungen umfassen.

Die fahrzeugseitige Ladevorrichtung 4 kann auch selbst zumindest einen Teilbereich des Unterbodens eines Fahrzeuges bilden, sodass für gewöhnlich zum Abschluss vorgesehene Unterbodenabdeckungen oder Unterbodenbleche zumindest bereichsweise entfallen können. Die Ladevorrichtung 4 kann somit einen Unterboden 5, zumindest in einem vorgegebenen Bereich, ausbilden.

Fig. 2 zeigt eine erfindungsgemäße fahrzeugseitige Ladevorrichtung 4 in einer seitlichen Schnittdarstellung. Die fahrzeugseitige Ladevorrichtung 4 umfasst eine Sekundärspule 2 in einem Gehäuse 3, wobei das Gehäuse 3 der Ladevorrichtung 4, wie auch in Fig. 1 unten gezeigt, nicht-planar ausgebildet ist, nämlich einen Knick aufweist, so dass der in Fahrzeuglängsrichtung vordere Teil der Ladevorrichtung 4 einen Winkel ungleich 180 Grad zu einem in Fahrzeuglängsrichtung hinteren Teil der Ladevorrichtung 4 aufweist.

Die Sekundärspule 2 der Ladevorrichtung 4 ist ebenfalls nicht-planar ausgebildet und weist an der selben Position wie das Gehäuse 3 einen Knick auf, so dass die Sekundärspule 2 der Form des Gehäuses 3 der Ladevorrichtung 4 folgt. Die Sekundärspule 2 kann somit in einer Anordnung ähnlich wie in Fig. 1 dargestellt auch der Form einer Karosserie bzw. eines Unterbodens folgen.

Eine entsprechende nicht-planare Form können außer den Wicklungen der Sekundärspule 2 auch gegebenenfalls Spulenträger und/oder Ferritkerne und /oder verschaltete Elektronikbauteile und / oder Tragelemente für elektronische Bauteile, zB. Platinen, der Ladevorrichtung 4 aufweisen. Bevorzugt weisen zwar die einzelnen elektronischen Bauteile an sich keinen Knick auf, aber die elektronischen Bauteile können auf einem Träger, zum Beispiel einer Platine, oder mehreren Trägern bzw. Platinen geometrisch so angeordnet sein, dass diese zusammen nicht eine planare Erstreckung aufweisen, sondern eine Anordnung entsprechend der geknickten Form des Trägerelementes bzw. der Trägerelemente, welche durch die geknickte und / oder gebogene Form der sekundären Ladeeinrichtung bedingt ist.

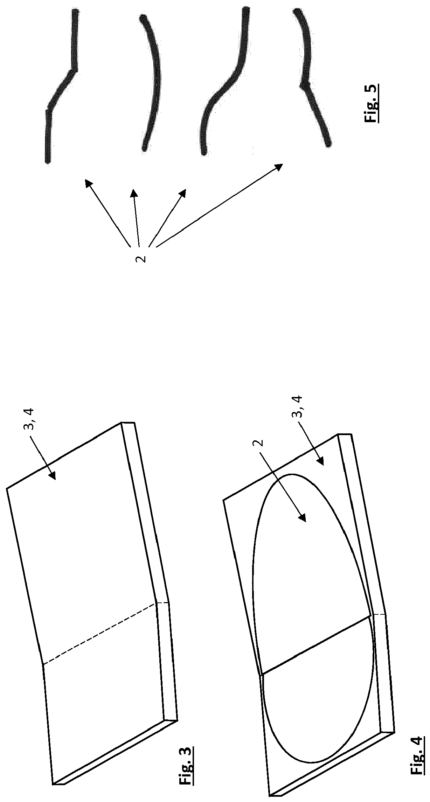

Fig. 3 zeigt eine derartige geknickte Ladevorrichtung 4 bzw. deren Gehäuse 3 in einer dreidimensionalen schematischen Darstellung von außen. In Fig. 4 ist die selbe Ladevorrichtung 4 nochmals dargestellt, jedoch mit ihrer von außen an sich nicht sichtbaren Sekundärspule 2, deren Form der Form des Gehäuses 3 angepasst ist.

In Fig. 5 sind schließlich verschiedene mögliche Formen für Sekundärspulen 2 einer erfindungsgemäßen fahrzeugseitigen Ladevorrichtung 4 in einem seitlichen Schnitt dargestellt. Die Sekundärspulen 2 können beispielsweise (in der Darstellung der Fig. 5 von oben nach unten) zwei (oder mehr) Knicks, also zwei (oder mehr) Winkel, aufweisen, eine Biegung, zwei (oder mehr) Biegungen oder eine Kombination von Winkeln und Biegungen, um so optimal an die Karosserie des Fahrzeuges angepasst zu sein.

### Bezugszeichenliste

- 1: Fahrzeug
- 2: Sekundärspule
- 3: Gehäuse
- 4: Ladevorrichtung
- 5: Unterboden

## Patentansprüche

1. Fahrzeugseitige Ladevorrichtung für ein induktives Ladesystem zum berührungslosen Aufladen eines elektrischen Energiespeichers eines Fahrzeuges (1), umfassend eine Sekundärspule (2) in einem Gehäuse (3) der Ladevorrichtung (4), wobei das Gehäuse (3) der Ladevorrichtung (4) nicht-planar ausgebildet ist, insbesondere zumindest einen Knick und/oder eine Biegung aufweist,
**dadurch gekennzeichnet, dass** die Sekundärspule (2) nicht-planar ausgebildet ist, insbesondere zumindest einen Knick und/oder eine Biegung aufweist, so dass die Sekundärspule (2) der Form des Gehäuses (3) der Ladevorrichtung (4) folgt.

2. Fahrzeugseitige Ladevorrichtung nach Anspruch 1,
**dadurch gekennzeichnet, dass** die Sekundärspule (2) Wicklungen umfasst und alle Wicklungen der Sekundärspule (2) nicht-planar ausgebildet sind, insbesondere zumindest einen Knick und/oder eine Biegung aufweisen.

3. Fahrzeugseitige Ladevorrichtung nach zumindest einem der vorhergehenden Ansprüche,
**dadurch gekennzeichnet, dass** die Sekundärspule (2) zumindest einen Spulenträger umfasst und der Spulenträger der Sekundärspule (2) nicht-planar ausgebildet ist, zumindest einen Knick und/oder eine Biegung aufweist.

4. Fahrzeugseitige Ladevorrichtung nach zumindest einem der vorhergehenden Ansprüche,
**dadurch gekennzeichnet, dass** die Sekundärspule (2) zumindest eine elektronische Schaltung und/oder zumindest ein Tragelement für eine elektronische Schaltung umfasst und die elektronische Schaltung und/oder das Tragelement nicht-planar ausgebildet oder angeordnet ist, zumindest einen Knick und/oder eine Biegung aufweist.

5. Fahrzeugseitige Ladevorrichtung nach zumindest einem der vorhergehenden Ansprüche,
**dadurch gekennzeichnet, dass** die Sekundärspule (2) zumindest einen Ferritkern umfasst und der Ferritkern der Sekundärspule (2) nicht-planar ausgebildet ist, zumindest einen Knick und/oder eine Biegung aufweist.

6. Induktives Ladesystem umfassend zumindest eine fahrzeugseitige Ladevorrichtung (4) nach zumindest einem der vorhergehenden Ansprüche und zumindest eine primärseitige Ladestation, wobei die Ladestation eine Primärspule umfasst,
**dadurch gekennzeichnet, dass** die Primärspule planar ausgebildet ist und somit nicht der Form der Sekundärspule (2) der fahrzeugseitigen Ladevorrichtung (4) entspricht.

7. Induktives Ladesystem umfassend zumindest eine fahrzeugseitige Ladevorrichtung (4) nach zumindest einem der Ansprüche 1 bis 5 und zumindest eine primärseitige Ladestation, wobei die Ladestation eine Primärspule umfasst,
**dadurch gekennzeichnet, dass** die Primärspule nicht-planar ausgebildet ist, insbesondere zumindest einen Knick und/oder eine Biegung aufweist, und hierdurch der Form der Sekundärspule (2) der fahrzeugseitigen Ladevorrichtung (4) entspricht.

8. Verfahren zur Herstellung einer fahrzeugseitigen Ladevorrichtung nach zumindest einem der Ansprüche 1 bis 5,
**dadurch gekennzeichnet, dass** die Sekundärspule (2) nicht-planar, insbesondere zumindest einen Knick und/oder eine Biegung aufweisend, hergestellt wird, insbesondere Wicklungen auf einen Spulenträger nicht-planar aufgewickelt werden, und die so hergestellte nicht-planare Sekundärspule (2) in ein nicht-planares Gehäuse (3) der Ladevorrichtung (4) eingelegt wird.

9. Verfahren zur Herstellung einer fahrzeugseitigen Ladevorrichtung nach zumindest einem der Ansprüche 1 bis 5,
**dadurch gekennzeichnet, dass** die Sekundärspule (2) planar hergestellt wird, insbesondere Wicklungen auf einen Spulenträger planar aufgewickelt werden, anschließend die Sekundärspule (2) unter Anwendung einer äußeren Kraft verformt wird, so dass die Sekundärspule (2) nicht-planar wird, insbesondere zumindest einen Knick und/oder eine Biegung aufweist, und die so hergestellte nicht-planare Sekundärspule (2) in ein nicht-planares Gehäuse (3) der Ladevorrichtung (4) eingelegt wird.
